# EUROPEAN PATENT APPLICATION

(11) **EP 4 600 771 A1**
(43) Date of publication of application: **13.08.2025**
(21) Application number: 24156691.8
(22) Date of filing: 08.02.2024
(51) Int. Cl.: G05B 19/418, G05B 23/02, G07C 3/14, G06F 3/0484

(54) **METHOD AND APPARATUS FOR CHARACTERIZATION AND EVALUATION OF MECHANICAL MEASUREMENTS**

(71) Applicant: Richard Gruber GmbH, 94419 Reisbach (DE)
(72) Inventor: Gruber, Richard, 94419 Reisbach (DE)
(74) Representative: Mzb PartmbB

(57) **Abstract**

The disclosed method and apparatus acquire mechanical measurement data from an external measurement system either using a camera or directly and provide a user interface to review it and to add more information. They extract a plot and characteristic parameters and evaluate them according to pre-defined checking criteria, providing a report that meets documentation standards and is suitable to meet legal requirements. This includes proper status tracking and guidance according to user roles, handling of multiple input plots, and definition of complex evaluation criteria. A typical application area would be process and quality assurance for threaded fastening in the automotive industry.

## Description

### Technical Field

Quality assurance and release procedures in the manufacturing and assembly industry involve acquisition, analysis, and evaluation of measurement results in the mechanical domain.

Dedicated diagnostic and production tools show most data directly to the user, i. e. on scales or screens; additional data is available on the circumstances of the measurement.

The user has the responsibility to analyze these data, determine specific characteristics and evaluate them to decide if they are acceptable for a given purpose.

In many industrial sectors, such as automotive, each execution of such a process has to be documented in detail to store evidence and ensure traceability for legal and contractual liability reasons. Corresponding reports have also to contain circumstantial information like involved persons, timing, configuration parameters, and photographic material. This process thus is critical and needs considerable effort and investment, including training.

### Background Art

Often, the output of the measurement results as a digital or printed plot is already done within the measurement equipment, but the evaluation according to individually defined criteria is still performed manually. The multitude of possible equipment and its specialized nature make it difficult to establish unified interfaces. Also, the criteria for the evaluation vary largely for different applications and customers. Only few aspects are subject to standards, so that a producer must follow possibly different procedures and criteria, laid out in confidential proprietary specification documents.

### Summary of Invention

The invention is a method and apparatus to automate the characterization and evaluation as set out in the appended set of claims.

### Technical Problem

The extraction of measurement results and evaluation of quality criteria needs much effort and imposes the risk of errors or inaccuracies, especially when it is performed manually. Furthermore, the collection and reporting of all relevant data must ensure completeness.

A typical application area is tightening analysis of bolted joints, where x-y diagrams, especially torque-angle, torque-time, force-distance and force-time plots are primary basis for the analysis that need to be acquired. But the invention can be applied also to other fastening methods like rivets, clinches, clips and to any mechanical measurement application in general.

From the input data, certain characteristics need to be derived, for example linear portions of a plot defining straight lines in that plot, intersections of such lines, plateaus, peaks, curvatures, and other critical points and ranges in the diagram. In torque-angle plots, these include the point of component joining, angle ranges of plastic deformation or fracture, applying individual 9-quadrant-methods, and torque coefficients resulting from the curvature.

Information about the exact circumstances like location, tools, and settings used in the measurement setup, as well as component of a final product, position of the measured object in that component, measurement process/method/accuracy, and involved persons need also to be recorded. This includes details like fastener model, oily/dirty/damaged condition, material and other properties of the fastening.

Customers like automotive OEMs (Original Equipment Manufacturer) demand detailed evaluation criteria for specific characteristics, such as allowed ratio of torque plateau/peak values and of a nominal torque given in a design specification versus the torque that causes plastic deformation of a bolt. Also, a specific measurement accuracy might be required. These criteria need to be defined, stored and applied.

### Solution to Problem

The invention is implemented by a computer program, preferably on a mobile device such as a tablet computer or mobile phone that has a camera integrated or attached. The program performs user authentication and authorization for certain access rights and roles -- such as "technician", "expert", and "admin" -- with state-of-the-art methods.

The program acquires measurement data and stores it in a unified dataset, offering to use a camera image of plots displayed or printed by the measurement equipment or to import data sent by the measurement equipment or from an external database, and prompting the user for other data.

The acquisition from camera images includes alignment of the image section and handling of optical distortions like trapezoidal corrections. This is done with state-of-the art algorithmic or artificial intelligence methods and user interaction.

In general, the input contains separate measurements in one plot or separate plots in one diagram, thus the user is prompted by the program to select the desired section, e. g. by choosing one of several distinct colors found in the image.

The program then analyzes the dataset for aforementioned predefined characteristics with state-of-the art algorithmic or artificial intelligence methods.

The characteristics are then evaluated by the program, checking built-in and user-defined criteria to determine a verdict like "okay" or "not okay" with the obvious meanings, or like "needs waiver" for corner cases that need additional attention.

For selected characteristic parameters, preferably those that could be changed by a re-design, the program presents ranges of values that would lead to a "okay" verdict.

Rules for the evaluation are defined beforehand by users with "expert" privilege using the graphical user interface of the program that allows for input of numerical constants and for selection - preferably by dropdown menus -- of the characteristics, required equalities, inequalities, or other operators.

Additional built-in rules are checked by the program to issue warnings in case of inconsistencies and undesirable factors like stick-slip-effects or to use a different analysis method when the original one did not succeed.

Essential parameters, like those of built-in rules can only be changed by users with "admin" privilege.

The program shows all inputs and outputs in the graphical user interface so that the user can check them and correct inputs, if needed.

The status of each measurement dataset is tracked, e. g. as "running", "completed", or "closed". Some status transitions are only allowed for users with privilege "expert" or "admin".

Additional evidence is acquired with internal means of the computer and added to the dataset, like time and location obtained with a GPS receiver and photos taken with the camera.

The report and the dataset are stored for archiving purposes and for transfer to external stakeholders.

The graphical user interface of the program provides process assurance by guiding through the procedure and offering normative background information like standards or training materials where appropriate, in order to comprehensibly achieve coverage of obligatory and optional inputs.

### Advantageous Effects of Invention

The invention speeds up the analysis and evaluation so much that it can usually be performed at the measurement location, which is especially advantageous when measurements have to be done repeatedly.

The invention provides and stores traceable documentation and evidence to fulfil contractual and legal obligations, as well as guidance for acceptable design changes.

The invented method can be used in various phases, such as product design, preproduction (including material test, short-time relaxation or creeping analysis), release to production (requiring a small number of samples), volume production (requiring periodic samples, but a limited number of measurements), process inspection (such as repeating measurements after a short time, e. g. residual torque), and field inspection (measurements after some load/time).

### Brief Description of Drawings

[Fig.1] gives an overview of the method.
[Fig.2] shows a plot extracted from a camera picture with multiple colors.
[Fig.3] shows a user interface to define evaluation criteria.

### Description of Embodiments

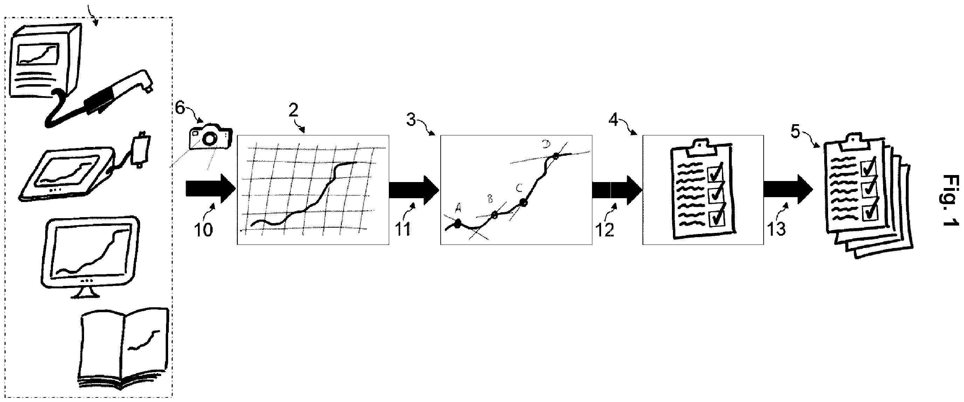

Embodiments of the invention can address different manufacturing and assembly domains or corresponding laboratories and the program for the method can be implemented on different hardware configurations, ranging from standalone multipurpose computing devices to computers attached to or integrated in measurement setups and equipment. The following descriptions concentrate on the example of torque-controlled testing of threaded fastenings executed on a tablet computer as sketched in [Fig.1].

The method typically includes a login procedure to authenticate the user and determine authorizations, like datasets or parameters that can be accessed or changed by that user according to distinct privileges such as "technician", "expert" and "admin". Correspondingly, basic information can be entered or reviewed by users, e. g. about their personal identity, applied measurement procedure, available risk categories, or evaluation details.

Evaluation details include the definition of characteristic parameters (3) with their measurement units and reference lists, for example of available bolt types and their technical parameters.

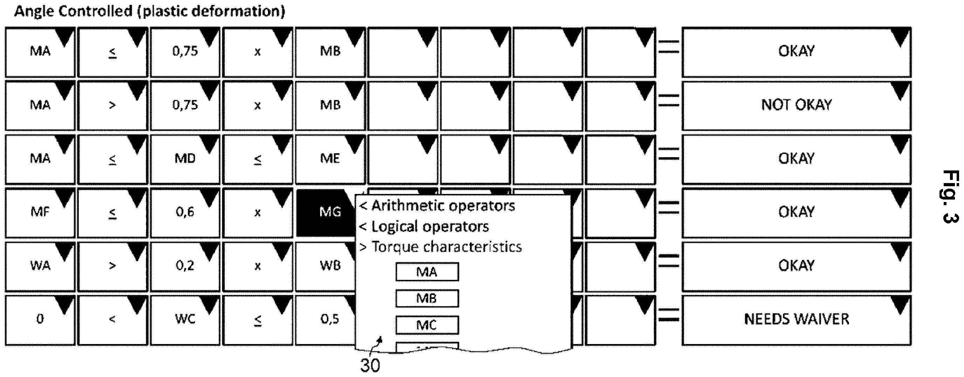

Furthermore, the evaluation criteria (4) for checking the characteristic parameters (3) have to be entered and edited by users with "expert" privilege, preferably in a graphical user interface as depicted in [Fig.3], that offers a visual table with a line for each of the evaluation criteria (4) including involved characteristic parameters (3), numerical constants, arithmetic and comparison operators, and the resulting verdict. For each field of the table, the graphical user interface typically accepts only valid inputs by means of drop-down menus (30), for process assurance.

Each of the datasets is kept by the program in a database, including unique identifier, date and time information, and status. State-of-the-art methods are used for selection, review, and editing of datasets, like filtered search and input forms for circumstantial data e. g. about project, contract, involved persons, including evidence of their qualification and many more. In addition to textual inputs, the location of the measurement is determined by GPS and photographic pictures of the measurement setup, used tools, component of a product that will contain the bolted joint and the joint itself can be recorded.

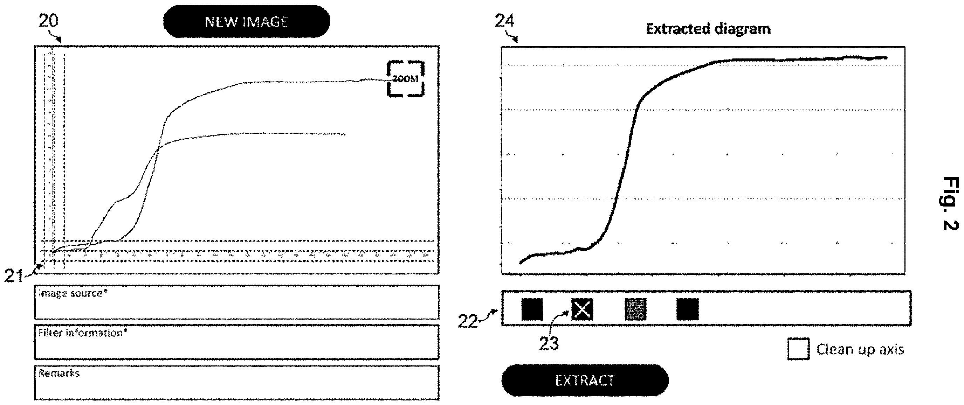

As most important input, a photographic picture or imported plot of the measurement result is recorded to acquire the numerical data of the measurement. [Fig.2] depicts the graphical user interface for recording a camera picture (20) and extracting an internal representation (24) of the plot. The user interface assists the user in positioning of the camera and alignment of the image area by overlaying adjustment lines (21) and in the selection of the plot portion for analysis by offering the detected colors (22), one of which (23) must be chosen by the user. Similarly, the user is assisted in scaling the internal representation (24) by entering the start and end point coordinates. The program then handles optical distortions like trapezoidal corrections with state-of-the art algorithmic or artificial intelligence methods.

Based on the acquired data, the program then derives the characteristic parameters (3) required for the evaluation (4) with standard mathematical methods, e. g. determining linear portions of the plot defining straight lines, intersections of such lines, and other critical points and ranges in the diagram. In the example of torque-angle plots, these include the point of component joining, angle ranges of plastic deformation or fracture, and torque plateaus.

The characteristic parameters (3) are then checked in relation to design parameters like target torque, angle, and parameters of the chosen bolt type, using the evaluation criteria (4), leading to a verdict for each criterion. For some design parameters, the program also shows the range of values which would lead to an "okay" verdict. The program displays an overall result, which usually is the most pessimistic of all the verdicts.

Additional built-in rules are checked by the program to either issue warnings in case of inconsistencies and undesirable factors like stick-slip-effects or to use a different analysis method when the original one failed. Similarly, the user can navigate back and correct input parameters, if needed.

When the analysis for a dataset has reached "completed" status and the user has sufficient privileges (e. g. "expert"), the program generates a report that is protected against alteration using standard methods, setting the status to "closed" to meet legal requirements. The program archives these reports and offers standard methods to transfer them to external stakeholders.

### Industrial Applicability

The invention is applicable throughout the manufacturing and assembly industries and in corresponding test or validation laboratories, for the full product lifecycle, e. g. during design, pre-production, production, and field use, especially for automotive OEMs.

### Reference Signs List

| Reference sign | Description |
|---|---|
| 1 | external measurement system |
| 2 | plot |
| 3 | characteristic parameters |
| 4 | evaluation criteria |
| 5 | report |
| 6 | camera |
| 10 | data acquisition step |
| 11 | processing step |
| 12 | checking step |
| 13 | reporting step |
| 20 | camera picture |
| 21 | adjustment lines |
| 22 | detected colors |
| 23 | chosen color |
| 24 | internal plot representation |
| 30 | drop-down-menu |

## Claims

1. Method of characterization and evaluation of mechanical measurements, comprising
data acquisition (10), processing (11), checking (12) and reporting (13) steps
**characterized in**
data being acquired from an external measurement system (1) together with additional data entered by the user to extract a plot (2) as an internal representation of the measurement and circumstances of the measurement, characteristic parameters (3) of the plot (2) being derived by standard mathematical operations like scaling, lines of best fit, intersection points, and slope changes,
checking the characteristic parameters (3) against predefined criteria (4) under control of the user preferably for quality and risk evaluation,
providing checking results and corresponding data in a report (5) for external usage.

2. Method of Claim 1 wherein
the data acquisition (10) is done by a camera (6) that records a display or printout of the external measurement system (1) and the circumstances of the measurement.

3. Method of Claim 1 wherein
the data acquisition (10) is done by direct transmission or import from the external measurement system (1).

4. Method of any of the preceding claims wherein
the user chooses one of several components of the plot (2), preferably by selecting their color.

5. Method of any of the preceding claims wherein
the evaluation criteria (4) can be defined by the user, preferably by choosing characteristic parameters (3), relational or arithmetic operators, and evaluation verdicts from drop-down menus and entering numerical constants.

6. Method of any of the preceding claims wherein
for some of the characteristic parameters (3), ranges that would satisfy the evaluation criteria are presented to the user.

7. Data processing apparatus comprising means for carrying out the method
of any of the preceding claims.

8. Computer program comprising instructions which, when the program is
executed by a computer, cause the computer to carry out the method of any of the preceding method claims.

9. Data carrier signal carrying the program of the previous claim.

## Amended claims

### Amended claims in accordance with Rule 137(2) EPC.

1. Method of characterization and evaluation of mechanical measurements, comprising
data acquisition (10), processing (11), checking (12) and reporting (13) steps, wherein
data being acquired from an external measurement system (1) together with additional data entered by the user to extract a plot (2) as an internal representation of the measurement and circumstances of the measurement, , wherein the data acquisition (10) is done by a camera (6) that records a display or printout of the external measurement system (1) and the circumstances of the measurement,
characteristic parameters (3) of the plot (2) being derived by standard mathematical operations like scaling, lines of best fit, intersection points, and slope changes,
checking the characteristic parameters (3) against predefined criteria (4) under control of the user, preferably for quality and risk evaluation,
providing checking results and corresponding data in a report (5) for external usage.

2. Method of Claim 1 wherein
the user chooses one of several components of the plot (2).

3. Method of any of the preceding claims, wherein the user chooses one of several components of the plot (2) by selecting their color.

4. Method of any of the preceding claims wherein
the evaluation criteria (4) can be defined by the user, preferably by choosing characteristic parameters (3), relational or arithmetic operators, and evaluation verdicts from drop-down menus and entering numerical constants.

5. Method of any of the preceding claims wherein
for some of the characteristic parameters (3), ranges that would satisfy the evaluation criteria are presented to the user.
Data processing apparatus comprising means for carrying out the method of any of the preceding claims.

6. Computer program comprising instructions which, when the program is executed by a computer, cause the computer to carry out the method of any of the preceding method claims.

7. Data carrier signal carrying the program of the previous claim.
